# EUROPEAN PATENT SPECIFICATION

(11) **EP 3 020 024 B1**
(45) Date of publication and mention of the grant of the patent: **26.04.2017**
(21) Application number: 13766684.8
(22) Date of filing: 09.07.2013
(51) Int. Cl.: G06T 7/20

(54) **METHOD FOR UPDATING TARGET TRACKING WINDOW SIZE**
VERFAHREN ZUM UPDATEN DER GRÖSSE EINES TRACKING-FENSTERS
PROCÉDÉ DE MISE À JOUR DE TAILLE DE FENÊTRE DE SUIVI DE CIBLE

(43) Date of publication of application: 18.05.2016
(73) Proprietor: Aselsan Elektronik Sanayi ve Ticaret Anonim Sirketi, 06370 Ankara (TR)
(72) Inventor: AKAGUNDUZ, Erdem, 06011 Ankara (TR)
(74) Representative: Dericioglu Kurt, Ekin
(86) International application number: PCT/IB2013/055638
(87) International publication number: WO 2015/004501

(56) References cited:
- WO-A1-2007/096003
- WO-A1-2013/088199
- CHIEN S-I S-I ET AL: "Adaptive window method with sizing vectors for reliable correlation-based target tracking", PATTERN RECOGNITION, ELSEVIER, GB, vol. 33, no. 2, 1 February 2000 (2000-02-01), pages 237-249, XP004243840, ISSN: 0031-3203, DOI: 10.1016/S0031-3203(99)00056-4

## Description

### Field of the Invention

The present invention relates to the field of image processing and methodologies to determine a target tracking window and update size of the window at every new image.

### Background of the Invention

Most video-based target tracking algorithms process the image within the borders of a window which encapsulates the target, thus reduce computation. It is important to determine the initial size of the target (in other words borders of the minimum sized window which encapsulates the whole target) for this kind of algorithms. The size of the target or the window may change in consequence of target or camera movements. For a trustworthy execution of the target tracking algorithm, the size of the target window must be estimated continually. In other saying, the size of the target window must be updated.

In tracking systems, target size can be determined via target size estimation algorithms which are executed initially. These estimations can be very accurate. However, in some cases, for example when the camera is approaching to the target (in which the target size expands in radical rates), the first estimation becomes useless. Moreover it is difficult to execute the target size estimation algorithm at every frame when target tracking process online at the same time. Therefore a need for updating minimum sized window which encapsulates the whole target (target window) during tracking occurs.
There are several ways to update the target window size, in other words to observe this continually changing size rate, during target tracking. Using recognition principles can give satisfactory results. However, an algorithm which provides less process power consumption is much useful.

China patent document CN101986348, an application in the state of the art, discloses a visual target identification method, comprising the following steps: inverting a collected original image to a binary image; calculating the enclosure frame of a visual target on the basis of the binary image; and searching characteristic points in the enclosure frame. The document also discloses a visual target tracking method. The method comprises: pretermitting that the size of the search window of a zeroth frame is the same as that of the image; identifying a first frame image to obtain the enclosure frame; and predicting the search window. An image processing method is used to calculate the enclosure frame and the characteristic points in the enclosure frame. Meanwhile, on the basis of a target tracking technology, a method is also provided based on a predictable search window, so as to predict and track the motion of the target, thereby obviously reducing the search range and improving the instantaneity of the target tracking method.

European patent document EP1634094, an application in the state of the art, discloses a multi-stage infrared (IR) image-based tracking system is provided that accurately identifies and tracks targets across a variety of different situations and environmental conditions. The system includes primary and secondary trackers. The secondary tracker supports the primary tracker by identifying and tracking targets when the primary tracker loses or fails to identify one or more targets, and helps the primary tracker reacquire valid targets. In an exemple of the system, the primary tracker is a correlation-based tracker, and the secondary tracker is a feature-based tracker. A pre-screener is also included, which operates concurrently with the correlation-based and feature-based trackers to generate a list of possible targets. The list can be used to provide a confidence level for the probable targets identified by each of the primary and secondary trackers. Sung-Il Chien and Si-Hun Sung, "Adaptive window method with sizing vectors for reliable correlation-based target tracking", Pattern Recognision, Elsevier, GB, vol. 33, no. 2, 1 February 2000, pages 237 - 249, ISSN: 0031-3203, DOI: 10.1016/S0031-3203(99)00056-4 discloses an adaptive window method that can provide a tracker with a tight reference window by adaptively adjusting its window size independently into all four side directions for enhancing the reliability of correlation-based image tracking in complex cluttered environments.

International application document WO 2007096003 discloses a video retrieval system comprising a retrieval means for retrieving trajectory data from a database as a response to a search query, whereby the search query is formulated on the basis of a search trajectory, which is representable and/or represented as a plurality of search segments, whereby the retrieval means comprises interpreting means for generating a plurality of minimum bounding areas, whereby the plurality of the minimum bounding areas covers the search trajectory or at least one of the search segments and whereby the retrieval means is realised for accessing the database by using at least one of the minimum bounding areas as a query area, whereby the minimum bounding areas of the plurality of bounding areas are arranged overlap-free and/or adjacently or with a search trajectory independent overlap.

International application document WO 2013088199 discloses a system and method for estimating size of an object of known position on an image, especially on infrared imaging systems. The method comprises the steps of; receiving the pixel image including target object and a coordinate of a pixel on it, calculating pixel standard deviations within a rectangular window centred around that pixel, by successively enlarging the window by a step-size, and obtaining at least one window size versus standard deviation graph, checking whether the graph is monotonically decreasing or not, finding and making a record of the window size at the point where the standard deviation first starts to decrease, checking if a previously recorded window size is existent, estimating the window size, checking if the maximum iteration limit is exceeded, increasing the step-size and initial window size and estimating the window size as the predetermined minimum window size.

### Summary of the Invention

An objective of the present invention is to provide a methodology to determine a target tracking window and update size of the window at every new image, using the initial target window and based on the principle of standard deviation value changes of pixels.

### Detailed Description of the Invention

A system and method realized to fulfill the objective of the present invention is illustrated in the accompanying figures, in which:

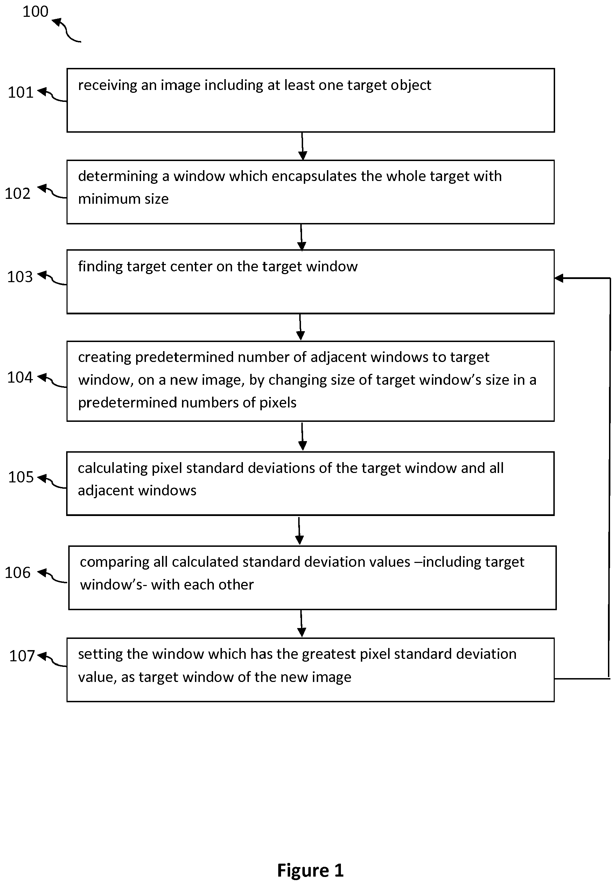

**Figure 1** is the flowchart of the method.
**Figure 2** is the view of the 8 different sized windows obtained by expanding and narrowing of the target window by N=2 pixels in all four directions.
**Figure 3** is an example of standard deviation values versus different sized windows around a 12x12 pixel size target

A method for updating a target tracking window size (100) comprises the following steps,
- receiving an image including at least one target object (101),
- determining a window (target window) which encapsulates the whole target with minimum size (102),
- finding the target center on the target window (103),
- creating a predetermined number of different sized windows according to the target window, on a new image, by changing the target window's size by a predetermined numbers of pixels (104),
- calculating pixel standard deviations of the target window and all different sized windows (105),
- comparing all calculated standard deviation values -including the target window standard deviation-with each other (106),
- setting the window which has the greatest pixel standard deviation value, as target window of the new image (107).

In method for updating track target window size (100), a grayscale image of the scene under consideration is received (acquired by an image sensor,camera etc.) via an image processing unit (101). All of the processes in the steps of the method are executed by an image processing unit (e.g. a computer which receives, processes and displays running images) on the images acquired by an image sensor. Image processing unit executes a preferred algorithm which estimates target window size and determines a window which encapsulates the whole target with minimum size (minimum pixels) (102).This window is called target window size. Throughout the document, window which encapsulates the whole target with minimum size will be mentioned as "target window".

In a preferred embodiment of the invention, target window size estimating algorithm is processed based on gray level differences. In a grayscale image of the scene under consideration, a target and its background have different gray levels. In other saying, a target and its background has a certain contrast value difference between them. Pixel standard deviation values are used to measure this contrast value difference. What is meant by pixel standard deviation values is calculation of the standard deviation of all pixels in a window. According to this approach, a window around the target, which encapsulates both target and background, has a high value of pixel standard deviation. More importantly, the correct window size has the highest value of standard deviation and is assumed to be the target window.

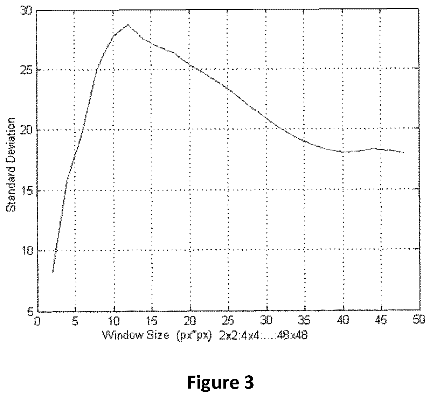

The most important feature of the mentioned target window size estimating algorithm is, it decides a target window by making use of a standard deviation values. Figure 3 is an example of standard deviation values versus different sized windows around a 12x12 pixel size target.

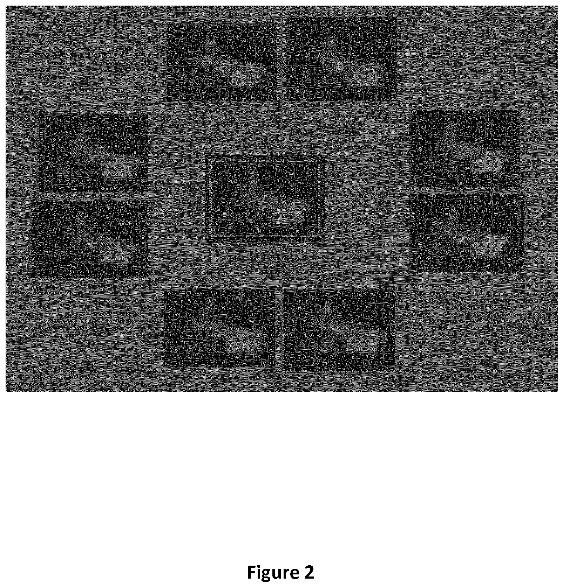

The peak value in (the highest standard deviation) Figure 3, is determined as the target window size.
Steps for updating a target window, which decided by using a preferred target window estimation algorithm, starts with step 103. In step 103 target center is found on the first image which is used for determining target window.
After finding target center (103), different sized windows are created, on a new image of target and background, by changing the size of the target window in a predetermined number of pixels (104). In preferred embodiment of the invention, the target window size is changed in only one direction (up, down, right or left) at a time. In this preferred embodiment, the target window size is expanded and narrowed in all four directions by N (preferred number) pixels. Thus, 8 different sized windows are obtained. Figure.2 shows 8 different sized windows obtained by expanding and narrowing of the target window by N=2 pixels in all four directions. The pixel standard deviations of all different sized windows are calculated (105). All of the calculated values -including target window standard deviation value- are compared with each other (106). The window which has the greatest value of standard deviation selected as target window of the new image (107). This new target window can be one of the different sized windows or can be the target window of the previous image.
Some arrangements can be made on the method for updating track target window size (100), depending on the characteristics of the tracking system and process. In a different embodiment of the invention, size of the window, which will be updated, can be up-limited to preferred size of pixels (e.g. 60x60 pixels) in order to reduce computation load of the hardware and software which are used in target tracking system. The computation load depending on standard deviation calculations will increase as the window size gets larger. As a result of limiting maximum size of the target window, even though an different sized window has the greatest value, it won't be selected as a new target window. Thus, computation load remains stable.

It can be decided that the different sized windows will be created in which directions and will be expanded or narrowed, according to the characteristics of tracking system and process. In another embodiment of the invention, if the tracker only does an approaching movement to the target, it is unnecessary to use narrowing different sized windows. Because the target will only get bigger in the image during tracking. Only expanding different sized windows can be used in such systems.

## Claims

1. A method for updating a target tracking window size (100), the method comprising the steps of,
- receiving an image including at least one target object (101),
- determining a target window which encapsulates the whole target with minimum size (102),
- finding the target center on the target window (103),
- creating a predetermined number of different sized windows according to the target window, on a new image, by changing the target window's size by a predetermined numbers of pixels (104),
- calculating pixel standard deviations of the target window and all different sized windows (105),
- comparing all calculated standard deviation values -including the target window standard deviation- with each other (106),
- setting the window which has the greatest pixel standard deviation value, as target window of the new image (107).

2. A method for updating a target tracking window size (100) according to claim 1, **characterized by** using gray level differences between target and its background in step "determining a target window which encapsulates the whole target with minimum size (102)".

3. A method for updating a target tracking window size (100) according to claim 1 or 2, **characterized by** using pixel standard deviation calculation of every pixel on an image for measuring gray level differences between target and its background in step "determining a target window which encapsulates the whole target with minimum size (102)".

4. A method for updating a target tracking window size (100) according to Claim 1 to 4, **characterized by** changing target window size in only one of directions of up, down, right or left at a time in step "creating a predetermined number of different sized windows according to the target window, on a new image, by changing the target window's size by a predetermined numbers of pixels (104)".

5. A method for updating a target tracking window size (100) according to Claim 1 to 5, **characterized by** expanding and narrowing the target window size in all four directions by a change of a preferred number of pixels in step "creating a predetermined number of different sized windows according to the target window, on a new image, by changing the target window's size by a predetermined numbers of pixels (104)".

6. A method for updating a target tracking window size (100) according to Claim 1 to 6, **characterized by** up-limiting the target window size, which will be updated, to a preferred size of pixels in step "setting the window which has the greatest pixel standard deviation value as target window of the new image (107)."

7. A method for updating a target tracking window size (100) according to Claim 1 to 6, **characterized by** deciding directions in which the different sized windows will be created and whether the different sized windows will be expanded or narrowed in step "creating a predetermined number of different sized windows according to the target window, on a new image, by changing the target window's size by a predetermined numbers of pixels (104)".

## Patentansprüche

1. Ein Verfahren zum Aktualisieren der Grösse eines Zielverfolgungsfensters (100), wobei das Verfahren die Schritte umfasst,
- Empfangen eines Bildes einschliesslich mindestens eines Zielobjekts (101),
- Bestimmen eines Zielfensters, welches das gesamte Ziel mit minimaler Grösse einkapselt (102),
- Finden des Zielmittelpunktes auf dem Zielfenster (103),
- Erstellen einer vorbestimmten Anzahl von unterschiedlich großen Fenstern entsprechend dem Zielfenster auf einem neuen Bild durch Änderung der Zielfenstergrösse mit einer vorgegebenen Anzahl von Pixeln (104),
- Berechnen der Pixel-Standardabweichungen des Zielfensters und aller Fenster von unterschiedlichen Grössen (105),
- Vergleichen aller berechneten Werte der Standartabweichung einschliesslich der Zielfenster-Standartabweichung miteinander (106),
- Einstellung des Fensters, welches den grössten Wert von Pixel-Standartabweichung aufweist, als Zielfenster des neuen Bildes (107).

2. Ein Verfahren zum Aktualisieren der Grösse eines Zielverfolgungsfensters (100) gemäß Anspruch 1, **gekennzeichnet durch** die Verwendung von Graustufenunterschieden zwischen dem Ziel und seinem Hintergrund im Verfahrensschritt "Bestimmen eines Zielfensters, welches das gesamte Ziel mit der minimalen Größe (102) einkapselt".

3. Ein Verfahren zum Aktualisieren der Grösse eines Zielverfolgungsfensters (100) gemäß Anspruch 1 oder 2, **gekennzeichnet durch** die Verwendung von Pixel-Standardabweichung-Berechnung jedes Pixels auf einem Bild zur Messung von Graustufenunterschieden zwischen dem Ziel und seinem Hintergrund im Verfahrensschritt "Bestimmen eines Zielfensters, welches das gesamte Ziel mit der minimalen Größe (102) einkapselt".

4. Ein Verfahren zum Aktualisieren der Grösse eines Zielverfolgungsfensters (100) gemäß Anspruch 1 bis 4, **gekennzeichnet durch** die Änderung der Zielfenstergrösse in nur einer der Richtungen auf, ab, rechts oder links zu einer Zeit im Verfahrensschritt "Erstellen einer vorbestimmten Anzahl von unterschiedlich dimensionierten Fenstern entsprechend dem Zielfenster auf einem neuen Bild **durch** Änderung der Zielfenstergrösse mit einer vorgegebenen Anzahl von Pixeln (104)",

5. Ein Verfahren zum Aktualisieren der Grösse eines Zielverfolgungsfensters (100) gemäß Anspruch 1 bis 5, **gekennzeichnet durch** Erweiterung und Verengung der Zielfenstergrösse in allen vier Richtungen **durch** Änderung einer bevorzugten Anzahl von Pixel im Verfahrensschritt "Erstellen einer vorbestimmten Anzahl von unterschiedlich großen Fenstern entsprechend dem Zielfenster auf einem neuen Bild **durch** Änderung der Zielfenstergrösse mit einer vorgegebenen Anzahl von Pixeln (104)",

6. Ein Verfahren zum Aktualisieren der Grösse eines Zielverfolgungsfensters (100) gemäß Anspruch 1 bis 6, **gekennzeichnet durch** Aufwärts-Einschränkung der Zielfenstergrösse, welche aktualisiert werden soll, auf eine bevorzugte Grösse von Pixeln im Verfahrensschritt "Einstellung des Fensters, welches den grössten Wert von Pixel-Standartabweichung aufweist, als Zielfenster des neuen Bildes (107)".

7. Ein Verfahren zum Aktualisieren der Grösse eines Zielverfolgungsfensters (100) gemäß Anspruch 1 bis 6, **gekennzeichnet durch** Bestimmen der Richtungen, in denen die unterschiedlich großen Fenster erstellt werden sollen und ob die Fenster von unterschiedlicher Größe im Verfahrens schritt "Erstellen einer vorbestimmten Anzahl von unterschiedlich großen Fenstern entsprechend dem Zielfenster auf einem neuen Bild **durch** Änderung der Zielfenstergrösse mit einer vorgegebenen Anzahl von Pixeln (104)" erweitert oder verengt werden sollen.

## Revendications

1. Un procédé pour mettre à jour une taille de fenêtre de suivi de cible (100), le procédé comprenant les étapes consistant à,
- recevoir une image comprenant au moins un objet cible (101),
- déterminer une fenêtre cible qui encapsule la cible entière avec une taille minimale (102),
- trouver le centre cible sur la fenêtre cible (103)
- créer un nombre prédéterminé de fenêtres de taille différente selon la fenêtre cible, sur une nouvelle image, en modifiant la taille de la fenêtre cible par un nombre prédéterminé de pixels (104),
- calculer les écarts-types de pixels de la fenêtre cible et toutes les fenêtres de tailles différentes (105),
- comparer toutes les valeurs d'écart-type calculées, y compris l'écart-type de fenêtre cible l'une par rapport à l'autre (106),
- définir la fenêtre qui a la valeur d'écart-type de pixel la plus élevée, comme fenêtre cible de la nouvelle image (107).

2. Un procédé pour mettre à jour une taille de fenêtre de suivi de cible (100) selon la revendication 1, **caractérisé par** l'utilisation de différences de niveaux de gris entre la cible et son arrière-plan à l'étape "détermination d'une fenêtre cible qui encapsule la cible entière avec une taille minimale (102)".

3. Un procédé pour mettre à jour une taille de fenêtre de suivi de cible (100) selon la revendication 1 ou 2, **caractérisé par** l'utilisation d'un calcul d'écart-type de pixels de chaque pixel sur une image pour mesurer des différences de niveaux de gris entre la cible et son arrière-plan à l'étape "détermination d'une fenêtre cible qui encapsule la cible entière avec la taille minimale (102)".

4. Un procédé pour mettre à jour une taille de fenêtre de suivi de cible (100) selon la revendication 1 à 4, **caractérisé par** la modification de la taille de fenêtre cible dans une seule des directions de haut, bas, à droite ou à gauche à un moment à l'étape "création un nombre prédéterminé de fenêtres de taille différente selon la fenêtre cible, sur une nouvelle image, en modifiant la taille de la fenêtre cible par un nombre prédéterminé de pixels (104)".

5. Un procédé pour mettre à jour une taille de fenêtre de suivi de cible (100) selon la revendication 1 à 5, **caractérisé par** l'expansion et le rétrécissement de la taille de fenêtre cible dans les quatre des directions par un changement d'un nombre préféré de pixels à l'étape "création d' un nombre prédéterminé de fenêtres de taille différente selon la fenêtre cible, sur une nouvelle image, en modifiant la taille de la fenêtre cible par un nombre prédéterminé de pixels (104)".

6. Un procédé pour mettre à jour une taille de fenêtre de suivi de cible (100) selon la revendication 1 à 6, **caractérisé par** la limitation de la taille de fenêtre cible, qui sera mise à jour, à une taille préférée de pixels à l'étape "définition de la fenêtre qui a la plus grande valeur d'écart-type de pixel comme fenêtre cible de la nouvelle image (107)".

7. Un procédé pour mettre à jour une taille de fenêtre de suivi de cible (100) selon la revendication 1 à 6, **caractérisé par** des directions de décision dans lesquelles les fenêtres de différentes tailles seront créées et si les fenêtres de différentes tailles seront agrandies ou rétrécies à l'étape "création d'un nombre prédéterminé de fenêtres de taille différente selon la fenêtre cible, sur une nouvelle image, en changeant la taille de la fenêtre cible par un nombre prédéterminé de pixels (104)".
